# EUROPEAN PATENT SPECIFICATION

(11) **EP 1 022 089 B1**
(45) Date of publication and mention of the grant of the patent: **21.09.2005**
(21) Application number: 00101058.6
(22) Date of filing: 20.01.2000
(51) Int. Cl.: B23Q 3/154, B24B 41/06, B25B 11/00, B24B 9/00

(54) **Method and plant for trimming, grinding and finishing metal workpieces**
Verfahren und Anlage zum Entgraten, Schleifen und Endbearbeiten von Metallwerkstücken
Procédé et installation pour ébarber, meuler et finir des pièces métalliques

(30) Priority: 22.01.1999 IT LC990001
(43) Date of publication of application: 26.07.2000
(73) Proprietor: IMF S.r.l., 21016 Luino (Varese) (IT)
(72) Inventor: Fumagalli, Franco, 23808 Vercurago (LC) (IT)
(74) Representative: Valentini, Giuliano

(56) References cited:
- EP-A- 0 254 939
- EP-A- 0 345 554
- EP-A- 0 554 017
- DE-A- 19 530 397
- JP-A- 57 149 130
- JP-A- 60 144 914
- US-A- 4 075 589
- US-A- 4 090 162

## Description

The present invention relates to a method and plant to effect trimming, grinding or surface-finishing operations on metal workpieces obtained by means of, for instance, casting, stamping or sintefing, according to the preambles of claims 1 and 14 as for example known from EP-A-0 254 939.

The invention relates in particular to a system using an automatic machine tool of programmable type, for instance a "robot" comprising an articulated arm that moves a rotating tool along the contour of the workpiece while the latter is held in a pre-set position in the workstation.

This particular type of system, conceptually opposite to that which employs the robot to move the workpiece with respect to a fixed tool, requires the use of particular adjustments both to hold the workpiece firmly in position during the machining cycle, and to initially position each workpiece precisely, the latter being a requirement to ensure the repeatability of the operations on the workpieces of the same production batch.

The known type of plants provide for the location of a workpiece on a carrying table equipped with an outline (or jig) that receives the lower portion of the workpiece to ensure the correct position of the same and prevent movement of the workpiece in horizontal direction with respect to the table. Anchorage of the workpiece is guaranteed by an element that presses strongly on the workpiece from the top to hold it firmly against the carrying table.

It is therefore evident that the automation of the machining operations in the known type of plants could be in itself particularly difficult to achieve above all because of the encumbrance of the means for anchoring the workpiece to the carrying table. In particular, not every point of the workpiece can be reached by the tool, requiring more than one machining step. Furthermore, the high cost of making a jig to locate the workpiece during machining could be unacceptable, above all in the case of productions that involve the machining of a limited number of units.

In any case, the considerable variety of burr that could be formed on the metal workpieces and the dimensional tolerances between one workpiece and another of the same series is often an obstacle to the use of automated machining systems for surface-finishing. In fact, such systems are often ineffective in cases of high tolerances or excessively pronounced burr, with consequent malfunction of the machine tool and/or high tool wear and/or insufficient machining of the workpiece.

The task of the present invention is to propose a method and plant for the machining, the grinding or the surface-finishing of metal workpieces that allow the drawbacks of the known art to be overcome.

Within the scope of this task, one object of the present invention is to propose a method and plant of the aforementioned type that ensures firm and secure anchorage of the workpiece.

Another object of the present invention is to propose a method and plant of the aforementioned type that anchors the workpiece firmly while at the same time leaving greater access to the surface for machining.

A further object of the present invention is to propose a method and plant of the aforementioned type that adapts the trajectories of the machining tool to the different types of burr on the workpieces.

Yet another object of the present invention is to propose a method and plant of the aforementioned type that gives improved repeatability when machining identical workpieces by an automated machine, even when subject to relatively high tolerances.

These objects are achieved by the present invention, which relates to a method according to claim 1. That allows the workpiece to be anchored by a particularly strong force without hindering access to the surface to be machined by the machining tool.

In particular, the magnetic field that holds down the workpiece on the carrying table is a static magnetic field, with lines of flux that cross the metal workpiece, and are closed inside of the same while the workpiece is held down on the carrying table. In this way, the necessary anchorage over time can be obtained without any reduction in the strength of anchorage, and without wasting energy to hold the workpiece to the table.

To release the anchorage of the workpiece and allow its removal from the carrying table, the method according to the invention provides for short-circuiting the lines of flux of the magnetic field by means of a plurality of static permanent magnets and a plurality of magnets of the electrically reversible type. Energy is therefore used only in the phase of removal of the workpiece from the table.

The table preferably comprises a plurality of alternating polar surface regions that confer a polar geometry of the chessboard type to the upper plane of the carrying table.

According to a particularly advantageous aspect of the present invention, the workpiece is supported on a plurality of supporting elements which project with respect to the upper plane of the carrying table and fastened to it in a detachable way. Furthermore, means are provided to facilitate the positioning of the workpiece on the supporting elements, in order to obtain the adjustable profiles in a simple and economic way. That avoids above all the use of specific jigs to ensure repeatability of positioning of the workpieces, making automated machining of even small batches of production economically viable. Furthermore, maintaining the workpiece raised with respect to the upper plane of the carrying table increases access by the machining tool.

To ensure the continuity of the lines of flux of the magnetic field, magnetic flux guide elements are provided located on the upper plane of the carrying table to join the magnetically active areas of the upper plane to the lower surface of the workpiece.

Movement of the carrying table is provided for toward and away of the machine tool while the workpiece is held down by the magnetic field. Once a workpiece is anchored on the carrying table by means of the magnetic field, the carrying table could be moved up to the machining station. At the conclusion of the machining, the same table could be moved to a station in which the workpiece is removed from the table.

According to an aspect of the present invention, provision is made for controlling the force exerted by the tool operating via an articulated arm of the machine tool along a direction perpendicular to the surface of the workpiece as well as along a direction tangential to the surface of the workpiece. Breakdowns or malfunctions of the machine tool caused by excessively pronounced burr or by workpieces differing with respect to the pre-set dimensions are avoided in this way.

According to a further aspect of the present invention, a rotating tool that maintains dimensions substantially constant over time and/or with wear is provided for, to ensure the same precision of machining on all the workpieces of the same batch, thus further increasing the repeatability of machining.

The invention further relates to a plant according to claim 14.

The carrying table preferably comprises a plurality of metal blocks in the form of parallelepipeds whose upper faces constitute the upper plane of the table. The side faces of each of the blocks are surrounded by static permanent magnets, while a magnet of the electrically reversible type is arranged in contact with the lower face of the metal blocks.

The location of the static permanent magnets and of the magnets of the electrically reversible type is such as to create a magnetically active plane comprising surface regions provided with alternate polarity arranged according to a chessboard-like polar geometry.

There are preferably a plurality of supporting elements provided on the surface of the carrying table which are raised with respect to the same surface. These supporting elements are provided in particular with a plurality of holes that receive pins as positioning organs of the workpiece, in such a way as to allow the repeatability of positioning of the workpieces, of the same batch without requiring the use of expensive jigs.

Magnetic flux guide elements are advantageously provided to close the magnetic circuit between the carrying table and the workpiece.

According to an aspect, the machine tool used in the plant according to the invention comprises an articulated mobile arm that carries a rotating tool at its extremity to effect the said operations of trimming, grinding, or surface-finishing of the workpieces.

The robot used in the plant according to the present invention can also be a simple cartesian robot with three degrees of freedom and with ability to rotate around at least one axis. Preferably, a robot is employed provided with an articulated arm that comprises a plurality of interconnected elements to give at least six axes of rotation. This preferential embodiment gives high versatility of use even with a particularly simple arm.

According to an aspect of the present invention, means are provided to control the force exerted by the tool along a direction perpendicular to the surface of the workpiece, as well as along a direction tangential to the surface of the same workpiece, in such a way as to safeguard the machine tool from possible breakdowns or malfunctions caused by excessively pronounced burr or from workpieces differing with respect to the pre-set dimensions.

Finally, to ensure the repeatability of machining, the rotating tool used by the machine tool comprises a support device on which there is abrasive material, thus allowing the dimensions of the tool to remain substantially unchanged with wear over time.

Further characteristics and advantages of the present invention will become clear from the description that follows, for illustrative but not limiting purpose, with reference to the enclosed schematic drawings, in which:
- Figure 1 is a plan view of a plant according to a possible embodiment of the present invention;
- Figure 2 is a plan view of a carrying table used in the plant according to the present invention;
- Figure 3 is a perspective view of the portion of the carrying table shown in Figure 2 with anchorage in active condition;
- Figure 4 is a prospective view of the portion of the carrying table shown in Figure 2 with the magnetic field in short-circuited condition;
- Figure 5 is an axonometric view of a portion of the carrying table with some supporting elements and with a magnetic flux guide element;
- Figure 6 is a perspective view of the magnetic flux guide element shown in Figure 6;
- Figures 7A and 7B are views of a possible embodiment of a tool used in a plant according to the present invention; and
- Figure 8 is a perspective view of a detail of the articulated arm of the machine tool used in the plant according to a possible embodiment of the present invention.

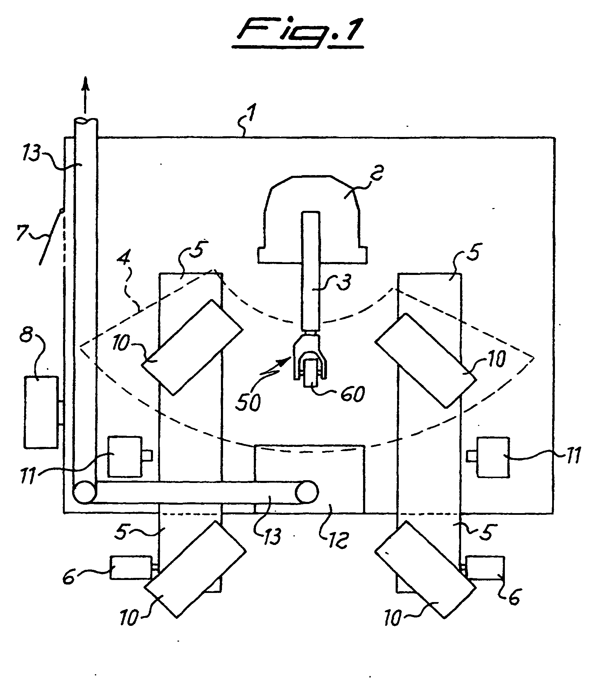

The plant shown in Figure 1 comprises in general a soundproof box 1 within which there is a machine tool 2 equipped with an articulated arm 3, defined as a whole as "robot," that works within an operating area 4 outlined by broken line. A rotating tool 60 (which will be described in more detail below) is fitted to the extremity of the articulated arm 3.

Conveyors 5 are provided inside the box 1 operated by suitable motorised actuators 6, on which the carrying tables 10 for the workpieces to be machined (not shown) are arranged. The carrying tables 10 move from a workpiece loading and unloading station external to the box 1, to a working station internal to the box 1 and the operating area 4 of the robot. The latter is preferably provided with an articulated arm 3 whose elements can preferably be rotated around at least six axes, conferring a high versatility of application without complicating the machine excessively.

The inside space of the box 1 is accessible through a door 7 located near to a control console 8 for the robot. Completing the plant are a pair of blower stations 11 that remove dust and machining residues from the outgoing workpieces, together with an aspiration plant 12 for such dust and residues which are then conveyed through a series of conduits 13 to filtration stations (not shown).

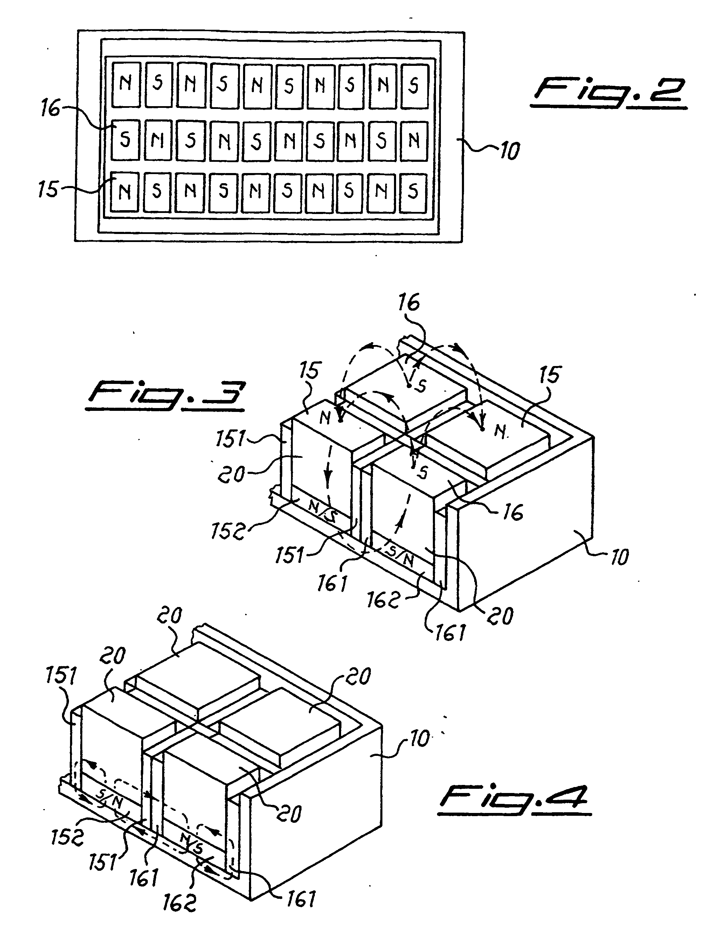

A carrying table 10 is shown schematically in plan view in Figure 2. Since most of the metal workpieces to be machined are ferrous alloys, or materials sensitive to magnetic attraction, the carrying table 10 is equipped with a plurality of static permanent magnets that generate a static magnetic field sufficiently intense to forcefully anchor the workpiece to the same table.

According to a particularly advantageous aspect of the present invention, the static permanent magnets are arranged in such a way to give a plurality of surface regions 15 with magnetic polarity N and surface regions 16 with magnetic polarity S arranged with alternating magnetic polarity, i.e. located as a whole according to a chessboard-like polar geometry.

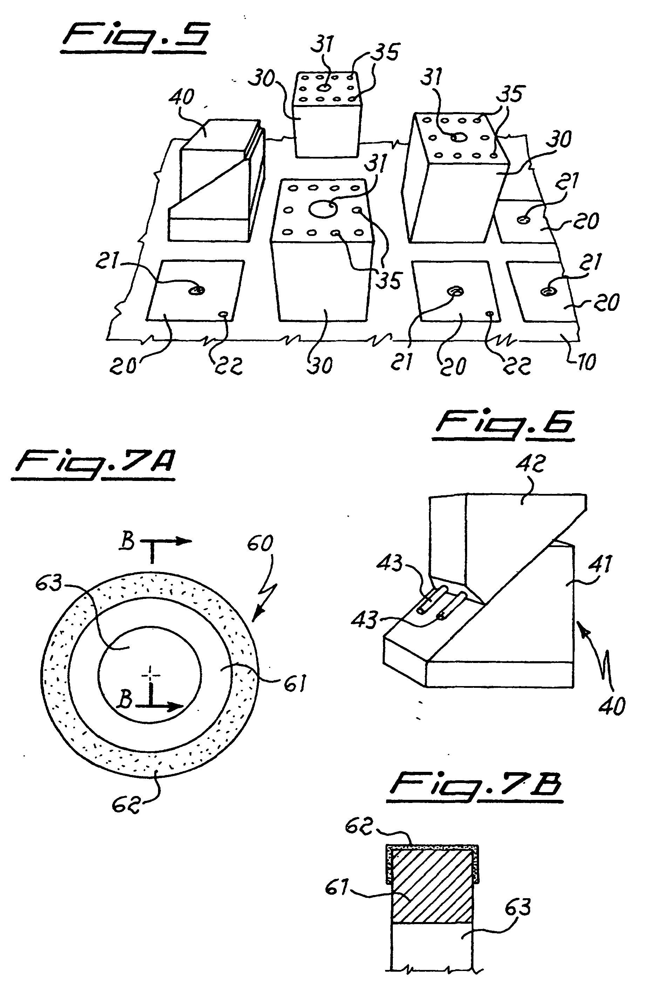

In particular, as is clearly visible in the Figures 3 and 4, each polar region consists of a parallelepiped metal block 20, surrounded on the sides by static permanent magnets 151 and 161 oriented respectively according to the polarity that it is desired to give the block 20. In practice, the magnets 151 conferring magnetic polarity N to a block 20 to give a polar region 15 are all oriented with the N-seeking pole toward the upper part, while the magnets 161 that confer the S polarity on a block 20 to give a polar region 16 are all oriented with the S-seeking pole toward the upper part. Possible magnetic shields (not shown) could be intermediate between the permanent magnets 151 and 161 that are placed side by side, such as between the permanent magnets 151 and 161 and the external edge of the carrying table 10.

There are of magnets 152 and 162 of the electrically reversible type corresponding to the base, or lower face, of each block 20. The magnets 152 and 162 located under the blocks 20 are arranged in polar agreement with the polarity to the overlying region when in normal (non-inverted) condition i.e. when a workpiece is anchored magnetically to the carrying table 10. In this condition, shown in Figure 3, the magnets 152 and 162 of the electrically reversible type combine to realise the magnetic field of attraction of the workpiece. The flux of the magnetic field shown schematically with the lines outlined in Figure 3 goes from magnetic S-poles to the magnetic N-poles in such a way as to cross the workpiece present on the carrying table 10 and to close inside of the same workpiece.

When the workpiece must be removed from the carrying table 10, the magnets 152 and 162 are inverted electrically using a source of electrical energy located in proximity to the loading and unloading stations external to the box 1 (Figure 1). In this condition, shown in Figure 4, the lines of flux of the magnetic field are short-circuited between the static permanent magnets 151 and 161 and the magnets 152 and 162, which now present inverse polarity with respect to the former. In this way, the upper surface of the blocks 20 loses the polarity induced by the static permanent magnets 15 and 16 that surround them on the sides, cancelling out the magnetic attraction that holds the workpiece on the carrying table 10.

Referring now to Figure 5, the upper surfaces of the blocks 20 create the upper plane of the carrying table 10 on which are preferably fastened in a detachable way the supporting elements 30 that keep the workpiece raised with respect to the surface of the same table. For this reason, the blocks 20 are equipped with a central threaded hole 21 and with a hole 22, or other type of suitably shaped seat, into which a locking element can be inserted to prevent the undesired rotation of a supporting element 30 fitted to a block 20.

Each supporting element 30 comprises in turn a central hole 31 that allows access to a fixing bolt (not shown) that engages in the underlying threaded hole 20, as well as a plurality of holes 35 located in suitable positions to receive locking pins for the workpiece in pre-set position. Alternatively, the holes 21 could also be smooth and the supporting elements could comprise a pair of pins which project downwards to be inserted into the respective holes 21 and 22. The central hole 31, which is no longer necessary in the supporting element 30, could be replaced by other holes 35.

In this way, it is possible to always arrange workpieces of the same production batch in the same working position without resorting to expensive jigs shaped according to the form of the workpiece to be held. Furthermore, keeping the workpiece raised from the carrying table 10 makes most of the workpiece surface accessible.

To maintain the continuity of the magnetic field between the upper plane of the carrying table 10 and the workpiece, metal guide elements 40 are provided for the magnetic flux. Figure 5 shows a single flux guide element 40, but it should be pointed out that, depending on the type of workpiece, these guide elements 40 could be more numerous and could be located otherwise than as shown. Naturally, the same is also true for the number and the location of the supporting elements 30.

The guide elements 40, one of which is shown in greater detail in Figure 6, comprises a pair of portions 41 and 42 made of metal and reciprocally joined in correspondence of their respective inclined faces. In particular, the guide element 40 comprises a portion of base 41 that is supported on the table 10 and is equipped with elastic means 43 that push the portion 42 upwards. Due to sliding along reciprocally inclined surfaces, the portion 42 always maintains its upper face parallel to the upper plane of the carrying table 10 until it meets the lower surface of the workpiece, thus ensuring the continuity of the magnetic field between the carrying table 10 and the workpiece to be machined.

A possible embodiment of a tool according to the present invention is shown in the side view in Figure 7A and in the section view in Figure 7B, the latter taken along the plane B-B of Figure 7A. The tool 60 preferably comprises a support device 61 which carries a layer of abrasive material 62, the latter constituted by, for instance, diamond powder or a synthetic abrasive such as "borazon" or similar. A central hole 63 in the support device 61 allows the mounting of the tool as realised onto a rotary drive apparatus (for instance, a grinder) that is in turn attached to the arm of the robot. Beyond ensuring long service life, the tool 60 as realised maintains its dimensions substantially unchanged up to the consumption of the abrasive material 62. Furthermore, even if the tool shown has substantially cylindrical form for simplicity, the form of the support device 61 could be realised in such a way as to give a particularly effective tool for various types of workpieces.

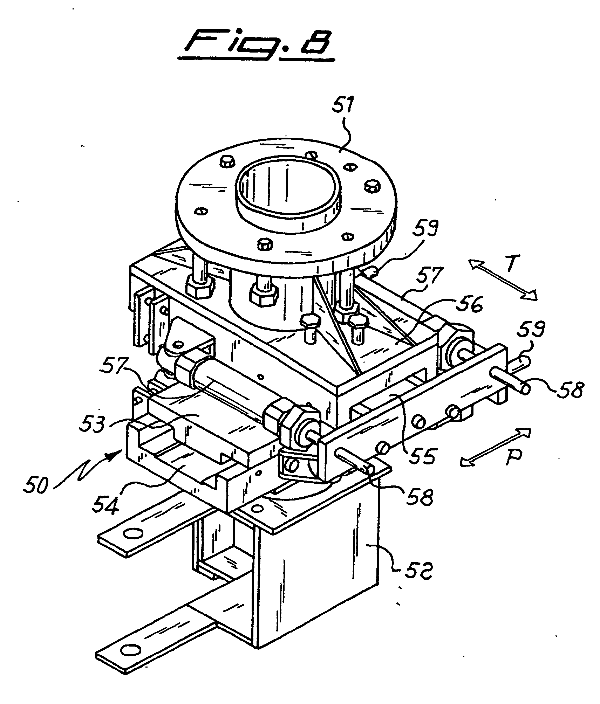

Figure 8 shows a detail of the machine tool used in the plant and, in particular, that part of the articulated arm 3 that is identified in general by the numerical reference 50 and defined as the "wrist" of the robot. Means are preferably provided on this part to automatically control the force exerted by the tool 60 on the surface of the workpiece subjected to machining.

In particular, the wrist 50 comprises a flange 51 for the connection of the wrist 50 to the articulated arm 3 and a support member 52 to allow the assembly of an apparatus for the rotary drive of the tool 60. Between the flange 51 and the support member 52 there is a first pair of elements 53 and 54 sliding reciprocally along a direction indicated by the double arrow P substantially perpendicular to the surface of the workpiece to be worked. Another pair of reciprocally sliding elements 55 and 56 are instead located along the direction indicated by the double T arrow and substantially tangential or parallel to the surface of the workpiece to be worked. The sliding elements 54 and 56 are connected to the support organ 52 and to the flange 51 respectively.

Pneumatic cylinders fed with a fluid maintained at a programmable constant pressure are fitted between each pair of sliding elements. Figure 8 clearly shows only the two hydraulic cylinders 57, fed through the respective supply lines 58, that act between the pair of elements 55 and 56. Only the respective supply lines 59 of the hydraulic cylinders acting between the pair of reciprocally sliding elements 53 and 54 are visible.

During operation, in the case where burr of excessive dimensions is present or in the case where the workpiece has dimensions that move away from those pre-set, the wrist of the robot is given a certain degree of programmable compliance along the directions indicated by the P and T arrows depending on the possible surface anomalies. In this way, while the robot exerts the same force for which it was initially programmed, the force exerted by the tool on the workpiece is reduced automatically without the need to program the robot to adapt the same to the dimensional irregularities of each workpiece. This prevents possible damages to the robot or the tool in the case of excessively pronounced burr or workpieces differing with respect to the pre-set dimensions.

## Claims

1. A method to perform automated trimming, grinding or surface-finishing operations on a metal workpiece, wherein said metal workpiece is anchored on a carrying table (10) by means of a magnetic field while a machine tool (2) performs said automated operations, said machine tool (2) comprising an articulated mobile arm (3) carrying on its extremity a rotating tool (60) which is moved along the contour of said workpiece to effect said automated operations, **characterised by** automatically controlling the force exerted by said rotating tool (60) on the surface of said workpiece.

2. A method according to Claim 1, wherein automatic control of the force exerted by said rotating tool (60) on the surface of said workpiece is provided along a direction perpendicular to the surface of said workpiece.

3. A method according to Claim 1, wherein automatic control of the force exerted by said rotating tool (60) on the surface of said workpiece is provided along a direction tangential or parallel to the surface of said workpiece.

4. A method according to Claim 1, wherein automatic control of the force exerted by said rotating tool (60) on the surface of said workpiece is provided at the wrist (50) of said articulated arm.

5. A method according to Claim 1, wherein the magnetic field on said carrying table (10) is a static magnetic field.

6. A method according to Claim 1, wherein the lines of flux of said magnetic field cross said metal workpiece while said workpiece is held down on said carrying table (10).

7. A method according to Claim 1, wherein the lines of flux of said magnetic field are closed inside of said metal workpiece while said workpiece is held down on said carrying table (10).

8. A method according to Claim 1, wherein said carrying table (10) comprises alternating polar surface regions (15, 16) that give the upper plane of said table a chessboard-like polar geometry.

9. A method according to Claim 1, wherein short-circuiting of the lines of flux of the magnetic field of said carrying table (10) is provided between a plurality of static permanent magnets (151, 161) and a plurality of magnets (152, 162) of the electrically reversible type in order to neutralise the force of anchorage of said workpiece to said carrying table (10).

10. A method according to Claim 1, wherein said workpiece is supported on a plurality of supporting elements (30) fixed to said carrying table (10), and wherein said supporting elements (30) are equipped with means to facilitate the positioning of said workpiece in a raised position with respect to the upper plane of said table.

11. A method according to Claim 1, wherein metal magnetic flux guide elements (40) are provided for joining the magnetically active surface of the upper plane of said carrying table (10) to said workpiece that rests on said metal supporting elements (30).

12. A method according to Claim 1, wherein the movement of said carrying table (10) is provided toward said machine tool (2) up to working station near said machine tool (2) and away from the same up to a loading/unloading station while said workpiece is held down by said magnetic field.

13. A method according to Claim 1, wherein a rotating tool (60) is provided having substantially constant dimensions.

14. A plant to effect automated trimming, grinding or surface-finishing operations on a metal workpiece, comprising a machine tool (2) to effect said operations on said metal workpiece; at least one carrying table (10) having magnetic anchorage means for generating a magnetic field to anchor said metal workpiece on said carrying table (10) at least during said automated operations, said machine tool (2) comprising an articulated mobile arm (3) carrying on its extremity a rotating tool (60) which is moved along the contour of said workpiece to effect said automated operations, **characterised by** including means for automatically controlling the force exerted by said rotating tool (60) on the surface of said workpiece.

15. A plant according to Claim 14, wherein said means provide for the automatic control of the force exerted by said rotating tool (60) on the surface of said workpiece along a direction perpendicular to the surface of said workpiece.

16. A plant according to Claim 14, wherein said means provide for the automatic control of the force exerted by said rotating tool (60) on the surface of said workpiece along a direction tangential or parallel to the surface of said workpiece.

17. A plant according to Claim 14, wherein said means for the automatic control of the force exerted by said rotating tool (60) on the surface of said workpiece are provided at the wrist (50) of said articulated arm.

18. A plant according to Claim 14, wherein said anchorage means comprise a plurality of static permanent magnets (151, 161).

19. A plant according to Claim 14, wherein a plurality of magnets (152, 162) of the electrically reversible type are provided to short-circuit the lines of flux of the magnetic field generated by said static permanent magnets (151, 161) inside said table (10).

20. A plant according to Claim 14, wherein said carrying table (10) comprises a plurality of parallelepiped-shaped metal blocks (20) whose upper faces constitute an upper plane of said carrying table (10), said static permanent magnets (151, 161) surrounding said metal blocks (20) on the side faces and said magnets (152, 162) of the electrically reversible type being arranged on the lower faces of said metal blocks (20).

21. A plant according to Claim 14, wherein said magnetic anchorage means comprise surface regions (15, 16) with alternate polarity located according to a chessboard-like polar geometry.

22. A plant according to Claim 14, wherein there are provided a plurality of supporting elements (30) raised with respect to said upper plane and equipped with means to facilitate the positioning of said workpiece on said supporting elements.

23. A plant according to Claim 22, wherein said means to facilitate the positioning of said workpiece comprise a plurality of pins to be inserted into suitable holes (31, 35) present on said supporting elements (30).

24. A plant according to Claim 14, wherein one or more magnetic flux guide elements (40) are provided to join the magnetically active surface of the upper plane of said carrying table (10) to said workpiece that rests on said metal supporting elements (30).

25. A plant according to Claim 14, wherein said articulated mobile arm (3) comprises a plurality of interconnected elements and is mobile with respect to at least six axes of rotation.

26. A plant according to Claim 14, wherein said rotating tool (60) comprises at least one support device (61) which carries a layer of abrasive material (62).

## Patentansprüche

1. Verfahren zum Durchführen automatisierter Entgratungs-, Schleif- oder Oberflächenendbearbeitungsabläufe auf einem Metallwerkstück, bei dem das Metallwerkstück auf einem Tragtisch (10) durch ein Magnetfeld festgelegt ist, während ein Bearbeitungswerkzeug (2) die automatisierten Arbeitsabläufe durchführt, wobei das Bearbeitungswerkzeug (2) einen gelenkig beweglichen Arm (3) umfasst, der an seinem Ende ein sich drehendes Werkzeug (60) trägt, das entlang der Kontur des Werkstücks bewegt wird, um die automatisierten Arbeitsabläufe zu bewirken, **gekennzeichnet durch** eine automatische Regelung der Kraft, die **durch** das sich drehende Werkzeug (60) auf die Oberfläche des Werkstücks ausgeübt wird.

2. Verfahren nach Anspruch 1, bei dem die automatische Regelung der durch das sich drehende Werkzeug (60) auf die Oberfläche des Werkstücks ausgeübten Kraft in einer Richtung senkrecht zu der Oberfläche des Werkstücks vorgesehen ist.

3. Verfahren nach Anspruch 1, bei dem die automatische Regelung der durch das sich drehende Werkzeug (60) auf die Oberfläche des Werkstücks ausgeübten Kraft in einer Richtung tangential oder parallel zu der Oberfläche des Werkstücks vorgesehen ist.

4. Verfahren nach Anspruch 1, bei dem die automatische Regelung der durch das sich drehende Werkzeug (60) auf die Oberfläche des Werkstücks ausgeübten Kraft am Gelenk (50) des gelenkigen Arms vorgesehen ist.

5. Verfahren nach Anspruch 1, bei dem das Magnetfeld auf dem Tragtisch (10) ein statisches Magnetfeld ist.

6. Verfahren nach Anspruch 1, bei dem die Flusslinien des Magnetfeldes das Metallwerkstück durchqueren, während das Werkstück auf dem Tragtisch (10) gehalten wird.

7. Verfahren nach Anspruch 1, bei dem die Flusslinien des Magnetfeldes innerhalb des Metallwerkstücks geschlossen werden, während das Werkstück auf dem Tragtisch (10) gehalten wird.

8. Verfahren nach Anspruch 1, bei dem der Tragtisch (10) Oberflächenbereiche (15, 16) wechselnder Polarität enthält, die der oberen Ebene des Tisches eine schachbrettartig pvlarisierke Geometrie verleihen.

9. Verfahren nach Anspruch 1, bei dem ein Kurzschluss der Flusslinien des Magnetfeldes des Tragtisches (10) zwischen einer Vielzahl von statischen Permanentmagneten (151, 161) und einer Vielzahl von Magneten (152, 162) eines elektrisch umschaltbaren Typs vorgesehen ist, um die Kraft zum Festlegen des Werkstücks an dem Tragtisch (10) aufzuheben.

10. Verfahren nach Anspruch 1, bei dem das Werkstück auf einer Vielzahl von Tragelementen (30) getragen wird, die an dem Tragtisch (10) befestigt sind, und bei dem die Tragelemente (30) mit Einrichtungen zum Erleichtern des Positionierens des Werkstücks in einer aufrechten Position bezüglich der oberen Ebene des Tisches versehen sind.

11. Verfahren nach Anspruch 1, bei dem Metallelemente (40) zum Lenken des magnetischen Flusses vorgesehen sind zum Verbinden der magnetisch aktiven Oberfläche der oberen Ebene des Tragtischs (10) mit dem Werkstück, das auf den Metalltragelementen (30) ruht.

12. Verfahren nach Anspruch 1, bei dem die Bewegung des Tragtischs (10) in Richtung zu dem Bearbeitungswerkzeug (2) bis zur Bearbeitungsstation nahe dem Bearbeitungswerkzeug (2) und weg von demselben bis zu einer Lade-/Entladestation vorgesehen ist, während das Werkstück durch das Magnetfeld niedergehalten wird.

13. Verfahren nach Anspruch 1, bei dem ein sich drehendes Werkzeug (60) mit im Wesentlichen gleichbleibenden Abmessungen vorgesehen ist.

14. Anlage zum Durchführen automatisierter Entgratungs-, Schleif- oder Oberflächenendbearbeitungsabläufe auf einem Metallwerkstück, enthaltend ein Bearbeitungswerkzeug (2) zum Durchführen der Arbeitsabläufe auf dem Metallwerkstück, zumindest einen Tragtisch (10) mit magnetischer Verankerungseinrichtung zum Erzeugen eines Magnetfeldes zum Festlegen des Metallwerkstücks auf dem Tragtisch (10) zumindest während der automatisierten Arbeitsabläufe, wobei das Bearbeitungswerkzeug (2) einen gelenkig beweglichen Arm (3) umfasst, der an seinem Ende ein sich drehendes Werkzeug (60) trägt, das entlang der Kontur des Werkstücks bewegt wird, um die automatisierten Arbeitsabläufe durchzuführen, **dadurch gekennzeichnet, dass** sie eine Einrichtung zur automatischen Regelung der durch das sich drehende Werkzeug (60) auf die Oberfläche des Werkstücks ausgeübten Kraft enthält.

15. Anlage nach Anspruch 14, bei der die Einrichtung die automatische Regelung der durch das sich drehende Werkzeug (60) auf die Oberfläche des Werkstücks entlang einer Richtung senkrecht zu der Oberfläche des Werkstücks ausgeübten Kraft bereitstellt.

16. Anlage nach Anspruch 14, bei der die Einrichtung die automatische Regelung der durch das sich drehende Werkzeug (60) auf die Oberfläche des Werkstücks entlang einer Richtung tangential oder parallel zu der Oberfläche des Werkstücks ausgeübten Kraft bereitstellt.

17. Anlage nach Anspruch 14, bei der die Einrichtung zur automatischen Regelung der durch das sich drehende Werkzeug (60) auf die Oberfläche des Werkstücks ausgeübten Kraft am Gelenk (50) des gelenkigen Arms vorgesehen ist.

18. Anlage nach Anspruch 14, bei der die Verankerungseinrichtung eine Vielzahl von statischen Permanentmagneten (151, 161) enthält.

19. Anlage nach Anspruch 14, bei der eine Vielzahl von Magneten (152, 162) des elektrisch umschaltbaren Typs vorgesehen ist, um die Flusslinien des Magnetfeldes, das durch die statischen Pennanentmagnete (151, 161) erzeugt wird, innerhalb des Tischs (10) kurzzuschließen.

20. Anlage nach Anspruch 14, bei der der Tragtisch (10) eine Vielzahl von parallelepipeförmigen Metallblöcken (20) enthält, deren obere Flächen eine obere Ebene des Tragtischs (10) bilden, wobei die statischen Permanentmagnete (151, 161) die Metallblöcke (20) an den Seitenflächen umgeben, und wobei die Magnete (152, 162) des elektrisch umschaltbaren Typs auf den unteren Flächen der Metallblöcke (20) angeordnet sind.

21. Anlage nach Anspruch 14, bei der die magnetische Verankerungseinrichtung Oberflächenbereiche (15, 16) mit wechselnder Polarität enthält, angeordnet entsprechend einer schachbrettartig polarisierten Geometrie.

22. Anlage nach Anspruch 14, bei der eine Vielzahl von Tragelementen (30) vorgesehen ist, die aus der oberen Ebene herausragen und ausgerüstet sind mit Einrichtungen zum Erleichtern des Positionierens des Werkstücks auf den Tragelementen.

23. Anlage nach Anspruch 22, bei der die Einrichtungen zum Erleichtern des Positionierens des Werkstücks eine Vielzahl von Stiften enthält, die in geeignete Löcher (31, 35) einfügbar sind, die auf den Tragelementen (30) vorgesehen sind.

24. Anlage nach Anspruch 14, bei der ein oder mehrere Elemente (40) zum Lenken des magnetischen Flusses vorgesehen sind, um die magnetisch aktive Oberfläche der oberen Ebene des Tragtischs (10) mit dem Werkstück zu verbinden, das auf den Metalltragelementen (30) ruht.

25. Anlage nach Anspruch 14, bei der der gelenkig bewegliche Arm (3) eine Vielzahl von mlteinander verbundenen Elementen enthält und bezüglich zumindest sechs Drehachsen beweglich ist.

26. Anlage nach Anspruch 14, bei der das sich drehende Werkzeug (60) zumindest eine Tragvorrichtung (61) enthält, die eine Schicht aus einem abrasiven Material (62) trägt.

## Revendications

1. Procédé pour exécuter des opérations automatisées pour ébarber, meuler et réaliser la finition de surface d'une pièce métallique, dans lequel ladite pièce métallique est ancrée sur une table porteuse (10) au moyen d'un champ magnétique pendant qu'une machine-outil (2) exécute lesdites opérations automatisées, ladite machine-outil (2) comprenant un bras mobile articulé (3) portant à son extrémité un outil rotatif (60) qui se déplace le long du contour de ladite pièce pour réaliser lesdites opérations automatisées, **caractérisé en ce qu'**il contrôle automatiquement la force exercée par ledit outil rotatif (60) sur la surface de ladite pièce.

2. Procédé selon la Revendication 1, dans lequel le contrôle automatique de la force exercée par ledit outil rotatif (60) sur la surface de ladite pièce est assuré le long d'une direction perpendiculaire à la surface de ladite pièce.

3. Procédé selon la Revendication 1, dans lequel le contrôle automatique de la force exercée par ledit outil rotatif (60) sur la surface de ladite pièce est assuré le long d'une direction tangentielle ou parallèle à la surface de ladite pièce.

4. Procédé selon la Revendication 1, dans lequel le contrôle automatique de la force exercée par ledit outil rotatif (60) sur la surface de ladite pièce est disposé au niveau de l'articulation (50) dudit bras articulé.

5. Procédé selon la Revendication 1, dans lequel le champ magnétique sur ladite table porteuse (10) est un champ magnétique statique.

6. Procédé selon la Revendication 1, dans lequel les lignes de flux dudit champ magnétique croisent ladite pièce métallique pendant que ladite pièce est maintenue sur ladite table porteuse (10).

7. Procédé selon la Revendication 1, dans lequel les lignes de flux dudit champ magnétique sont fermées à l'intérieur de ladite pièce métallique pendant que ladite pièce métallique est maintenue sur ladite table porteuse (10).

8. Procédé selon la Revendication 1, dans lequel ladite table porteuse (10) comprend des régions de surface polaire alternées (15, 16) qui donnent au plan supérieur de ladite table une géométrie polaire de type échiquier.

9. Procédé selon la Revendication 1, dans lequel la mise en court-circuit des lignes de flux du champ magnétique de ladite table porteuse (10) est assurée entre une pluralité d'aimants permanents statiques (151, 161) et une pluralité d'aimants (152, 162) du type électriquement réversible afin de neutraliser la force d'ancrage de ladite pièce sur ladite table porteuse (10).

10. Procédé selon la Revendication 1, dans lequel ladite pièce est supportée sur une pluralité d'éléments de support (30) fixés sur ladite table porteuse (10) et dans lequel lesdits éléments de support (30) sont dotés de moyens pour faciliter le positionnement de ladite pièce dans une position surélevée par rapport au plan supérieur de ladite table.

11. Procédé selon la Revendication 1, dans lequel les éléments de guidage (40) du flux magnétique du métal sont disposés pour faire se rejoindre la surface magnétiquement active du plan supérieur de ladite table porteuse (10) sur la pièce qui repose sur lesdits éléments de support en métal (30).

12. Procédé selon la Revendication 1, dans lequel le mouvement de ladite table porteuse (10) est assuré vers ladite machine-outil (2) juequ'à la station de travail située près de la machine-outil (2) et en éloignement par rapport à celle-ci jusqu'à une station de chargement/déchargement pendant que ladite pièce est maintenue par ledit champ magnétique.

13. Procédé selon la Revendication 1, dans lequel un outil rotatif (60) est prévu ayant des dimensions sensiblement constantes.

14. Installation pour exécuter des opérations pour ébarber, meuler et réaliser la finition de surface d'une pièce métallique, comprenant une machine-outil (2) pour réaliser lesdites opérations sur ladite pièce métallique, au moins une table porteuse (10) ayant des moyens d'ancrage magnétiques pour générer un champ magnétique pour ancrer ladite pièce métallique sur ladite table porteuse (10) au moins pendant lesdites opérations automatisées, ladite machine-outil (2) comprenant un bras mobile articulé (3) portant à son extrémité un outil rotatif (60) qui est déplacé le long du contour de ladite pièce pour réaliser lesdites opérations automatisées, **caractérisées en ce qu'**elle inclut des moyens pour contrôler automatiquement la force exercée par ledit outil rotatif (60) sur la surface de ladite pièce.

15. Installation selon la Revendication 14, dans laquelle lesdits moyens permettent le contrôle automatique de la force exercée par ledit outil rotatif (60) sur la surface de ladite pièce le long d'une direction perpendiculaire à la surface de ladite pièce.

16. Installation selon la Revendication 14, dans laquelle lesdits moyens permettent le contrôle automatique de la force exercée par ledit outil rotatif (60) sur la surface de ladite pièce le long d'une direction tangentielle ou parallèle à la surface de ladite pièce.

17. Installation selon la Revendication 14 dans laquelle lesdits moyens de contrôle automatique de la force exercée par ledit outil rotatif (60) sur la surface de ladite pièce sont disposés au niveau de l'articulation (50) dudit bras articulé.

18. Installation selon la Revendication 14, dans laquelle lesdits moyens d'ancrage comprennent une pluralité d'aimants permanents statiques (151, 161).

19. Installation selon la Revendication 14, dans laquelle une pluralité d'aimants (152, 162) du type électriquement réversible sont prévus pour mettre en court-circuit les lignes de flux du champ magnétique généré par lesdits aimants permanents (151, 161) à l'intérieur de ladite table (10).

20. Installation selon la Revendication 14, dans laquelle ladite table porteuse (10) comprend une pluralité de blocs métalliques de forme parallélépipédique (20) dont les faces supérieures constituent un plan supérieur de ladite table porteuse (10), lesdits aimants permanents statiques (151, 161) entourant lesdits blocs métalliques (20) sur les faces latérales et lesdits aimants (152, 162) du type électriquement réversible étant disposés sur les faces inférieures desdits blocs métalliques (20).

21. Installation selon la Revendication 14, dans laquelle lesdits moyens d'ancrage comprennent des régions de surface (15, 16) avec une polarité alternée disposée selon une géométrie polaire de type échiquier.

22. Installation selon la Revendication 14, dans laquelle sont prévus une pluralité d'éléments de support (30) surélevés par rapport audit plan supérieur et équipés de moyens pour faciliter le positionnement de ladite pièce sur lesdits éléments de support.

23. Installation selon la Revendication 22, dans laquelle lesdits moyens pour faciliter le positionnement de ladite pièce comprennent une pluralité de goupilles qui s'insèrent dans des trous appropriés (31, 35) présents sur lesdits éléments de support (30).

24. Installation selon la Revendication 14, dans laquelle un ou plusieurs éléments de guide de flux magnétique (40) sont disposés pour joindre la surface magnétiquement active du plan supérieur de ladite table porteuse (10) avec ladite pièce qui repose sur lesdits éléments de support métalliques (30).

25. Installation selon la Revendication 14, dans laquelle ledit bras mobile articulé (3) comprend une pluralité d'éléments interconnectés et est mobile par rapport à au moins six axes de rotation.

26. Installation selon la Revendication 14, dans laquelle ledit outil rotatif (60) comprend au moins un dispositif de support (61) qui porte une couche de matériau abrasif (62).
